# EUROPEAN PATENT APPLICATION

(11) **EP 4 752 733 A1**
(43) Date of publication of application: **03.06.2026**
(21) Application number: 24216560.3
(22) Date of filing: 29.11.2024
(51) Int. Cl.: G06F 12/02

(54) **DATA PROCESSING APPARATUS WITH A REVOCATION ENTITY FOR TEMPORAL MEMORY SAFETY**

(71) Applicant: SCI Semiconductor Limited, Caldecote, Cambridge CB23 7NU (GB)
(72) Inventor: BATES, Colin, Lesmahagow, Lanark, ML11 0JS (GB)
(74) Representative: Patentship Patentanwaltsgesellschaft mbH

(57) **Abstract**

Each memory location of a main memory (140) is associated with a respective tag bit indicating whether a respective value stored at the respective memory location is a pointer. A revocation entity (135) invalidates one or more pointers referring to one or more deallocated objects in the main memory. The revocation entity is arranged between a memory interconnect (130) and the main memory, and implements a revocation operation, comprising loading a value from a current memory location of the main memory, and overwriting the tag bit associated with the current memory location of the main memory, if the loaded value is a pointer referring to a deallocated object. The revocation entity detects store operations of a main processor (120) to the main memory and aborts the revocation operation, if during the revocation operation a store operation to the current memory location of the main memory is detected.

## Description

### TECHNICAL FIELD

The invention relates to electronic computing devices. More specifically, the invention relates to a data processing apparatus with a revocation entity for temporal memory safety.

### BACKGROUND OF THE INVENTION

Temporal memory safety of electronic computing devices concerns how to secure an application even where memory locations contain different data at different times during program execution. When memory is freed by an application and later reallocated, it is potentially possible that the memory is accessed with the aim that the original data is present. Consider the case where a program holds a pointer to some memory, frees the memory but then keeps the pointer and tries to access through the pointer again. The result is a use-after-free bug (or use-after-reallocate if the memory has been given to the application again). Such undefined behaviour has the potential to leak information or to enable an attacker to take control of the application. As will be appreciated, language-level approaches, such as garbage collection or ownership models, may prevent this, in cases where all code is in the same language, but hardware features are useful for languages that do not have these features or when code is provided by different vendors without a trusted compiler.

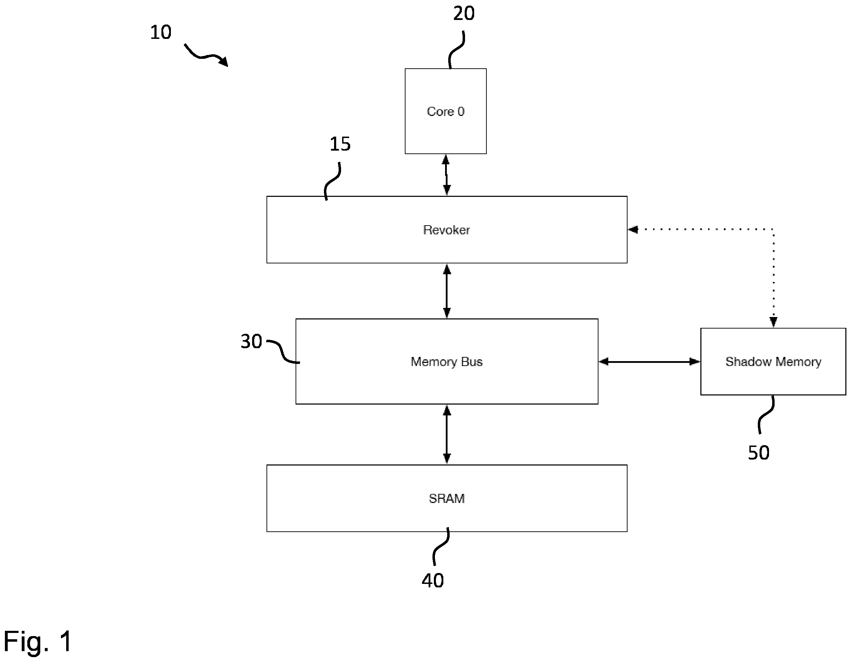

WO2023/239463A1 discloses a computing device 10 (illustrated in figure 1) with a hardware revocation entity 15 for invalidating a pointer, that refers to a deallocated object, from memory, such as a SRAM 40. The hardware revocation entity 15 implements a revocation pipeline coupled to a pipeline of a main processor 20 of the computing device 10. The revocation pipeline shares access to the memory 40 with the main pipeline. As can be taken from figure 1, the hardware revocation entity 15 is located between the main processor 20 and a memory bus 30 and may interact with a shadow memory 50 for invalidating pointers referring to deallocated objects in the memory 40. More specifically, the revocation state machine of the hardware revocation entity 15 disclosed in WO2023/239463A1 implements the following loop: (1) load a capability-sized word from the memory 40; (2) if it is untagged or its base is not in the revokable range, move to the next address of the memory 40 and go to step 1; (3) load the revocation bit from the shadow memory 50 that corresponds to the base address; (4) if the revocation bit is 1, clear the tag bit in the memory 40; and (5) repeat with step 1.

A complexity comes from the fact that, at any point between step 1 and step 4, there may have been a store to the location in memory 40 that is being revoked. If this is the case, step 4 must be skipped. According to WO2023/239463A1 this is avoided by having the revocation entity 15 observe stores to the memory 40 and skip the revocation if the data being stored overlaps the memory range used to store the pointer. This is possible because according to WO2023/239463A1 the revocation entity 15 is part of the load-store pipeline shared with the main processor 20 and so may observe every store to memory 40. However, if, for instance, there are multiple masters on the bus 30 (for example, a DMA engine or two cores), the approach disclosed in WO2023/239463A1 does not work.

### SUMMARY OF THE INVENTION

It is therefore an object of the invention to provide a data processing apparatus with a revocation entity for temporal memory safety allowing for operation, for instance, with multiple masters.

The foregoing and other objects are achieved by the subject matter of the independent claims. Further implementation forms are apparent from the dependent claims, the description and the figures.

According to a first aspect a data processing apparatus, e.g. a memory constrained system is provided, wherein the data processing apparatus according to the first aspect comprises at least one main processor, e.g. one or more cores, configured to process data, at least one main memory, e.g. one or more SRAMs, configured to store data at a plurality of memory locations, wherein each of the plurality of memory locations is associated with a respective tag bit indicating whether a respective value stored at the respective memory location is a pointer, and a memory interconnect configured to exchange data between the main processor and the main memory. The memory interconnect may be implemented as a memory bus.

The data processing apparatus according to the first aspect further comprises at least one revocation entity for invalidating one or more pointers referring to one or more deallocated objects in the main memory (herein also referred to as "dangling" pointers). According to the present invention the revocation entity of the data processing apparatus according to the first aspect is arranged between the memory interconnect and the main memory, in particular all write ports the memory interconnect has access to as well as one or more reads ports of the main memory, and configured to implement a revocation operation (also referred to as invalidation operation or revocation cycle), comprising loading a value from a current memory location of the main memory, and overwriting the tag bit associated with the current memory location of the main memory, if the loaded value is a pointer referring to a deallocated object (stored at least partially at the current memory location). The revocation entity is further configured to detect, i.e. monitor store operations (also referred to as write operations) of the main processor to the main memory and to abort the revocation, i.e. invalidation operation, if during the revocation operation a store operation of the main processor to the current memory location of the main memory is detected by the revocation entity. As will be appreciated, by overwriting the tag bit associated with the current memory location (in case no store operation to the current memory location is detected during the revocation operation) the pointer becomes unusable by changing the is-pointer value of the tag bit to the is-not-pointer value of the tag bit. In an embodiment, the revocation entity may be configured to overwrite also the current memory location in addition to the tag bit associated with the current memory location, for instance, by zeroing the current memory location.

As will be further appreciated, in comparison with the revocation entity disclosed in WO2023/239463A1, the data processing apparatus according to the first aspect implements the revocation entity as a separate entity on the memory interconnect, e.g. memory bus, so that the revocation entity may lock the bus (or individual locations) during each read-modify-write cycle, i.e. the revocation operation. Thus, the revocation operation is made more efficient by arranging the revocation entity between the memory and the memory interconnect, in particular memory bus, because every store flows through the revocation entity so that the revocation entity may easily detect conflicts and skip the writeback, wherever they come from in the system. As will be appreciated, the approach implemented by the data processing apparatus according to the first aspect scales to multiple memory banks with one revocation entity per bank. This may incur some possible contention on revocation bitmaps maintained in a shadow memory, but the order of revocation is not defined and so it is possible to alleviate this with additional pipelining in the revocation entities, so that more than one in-flight revocation operation may be used.

In a further embodiment, prior or in parallel to loading the value from the current memory location of the main memory the revocation operation further comprises loading one or more of the plurality of tag bits, including the tag bit associated with the current memory location of the main memory. In an embodiment the plurality of tag bits may be stored in the main memory, e.g. the one or more SRAMs.

In a further embodiment, the revocation entity is configured to perform the revocation operation for a plurality of current memory locations of the main memory substantially in parallel.

In a further embodiment, the revocation entity is configured to load a plurality of tag bits associated with the plurality of current memory locations of the main memory and to load the respective value from the respective current memory location of the main memory only for those current memory locations which the respective tag bit indicates to be a pointer.

In a further embodiment, the revocation entity is configured to maintain a bit mask of memory locations that have been stored to during the revocation operation. When a location in the main memory is stored to, the corresponding bit in the mask may be cleared. Instead of aborting the revocation operation, the revocation entity may instead use the bit mask of locations that have been written to update tags only that correspond to locations that have not been concurrently modified.

In a further embodiment, the one or more pointers comprise one or more fat pointers and/or one or more Capability Hardware Enhanced RISC Instructions, CHERI, capabilities. In an embodiment, the pointers are unforgeable and have address bounds associated with them for allowing to determine an address range a pointer may cover. As will be appreciated, CHERI capabilities may represent pointers, that provide an in-band base and length, and a non-addressable tag bit that differentiates valid and invalid pointers.

In a further embodiment, the memory interconnect is implemented as a memory bus.

In a further embodiment, the data processing apparatus comprises a plurality of processing units, including the main processor, configured to process data, wherein the revocation entity is arranged between the memory interconnect and the plurality of processing units.

In a further embodiment, the data processing apparatus further comprises one or more shadow memories and each shadow memory is configured to store a plurality of revocation bits (also referred to as free bits), wherein each revocation bit is associated with, i.e. referring to a respective memory location of the plurality of memory locations of the main memory and indicative of whether the respective memory location is deallocated, i.e. freed.

In a further embodiment, the revocation entity is configured to check whether the loaded value is a pointer referring to a deallocated object based on the tag bit associated with the loaded value and the revocation bit associated with the memory location the loaded value, i.e. the pointer is referring to.

In a further embodiment, the data processing apparatus comprises a plurality of memory units, including the main memory, configured to store data at a plurality of memory locations, wherein each of the plurality of memory locations is associated with a respective tag bit indicating whether a respective value stored at the respective memory location is a pointer and wherein the revocation entity is arranged between the memory interconnect and the plurality of memory units.

In a further embodiment, each of the plurality of memory units is associated with a shadow memory configured to store a plurality of revocation bits.

In a further embodiment, the data processing apparatus comprises a plurality of revocation entities for invalidating one or more pointers referring to one or more deallocated objects in the plurality of memory units, wherein each revocation entity is arranged between the memory interconnect, e.g. memory bus and a respective memory unit of the plurality of memory units and configured to implement a revocation operation, comprising:
loading a value from a current memory location of the respective memory unit of the plurality of memory units; and
overwriting the tag bit associated with the current memory location of the respective memory unit of the plurality of memory units, if the loaded value is a pointer referring to a deallocated object;
wherein each revocation entity is further configured to detect store operations to the respective memory unit of the plurality of memory units and to abort the revocation operation, if during the revocation operation a store operation to the current memory location of the respective memory unit of the plurality of memory units is detected.

In a further embodiment, each of the plurality of revocation entities is associated with a shadow memory for checking whether a respective loaded value is a pointer referring to a deallocated object.

In a further embodiment, the revocation entity is configured to scan at least a portion of the main memory comprising a plurality of memory locations by performing the revocation operation sequentially and/or in parallel for the plurality of memory locations of the portion of the main memory.

According to a second aspect a method is provided for operating a data processing apparatus, the data processing apparatus comprising a main processor configured to process data, a main memory configured to store data at a plurality of memory locations, wherein each of the plurality of memory locations is associated with a respective tag bit indicating whether a respective value stored at the respective memory location is a pointer, a memory interconnect configured to exchange data between the main processor and the main memory, and a revocation entity for invalidating one or more pointers referring to one or more deallocated objects in the main memory, wherein the revocation entity is arranged between the memory interconnect and the main memory, wherein the method comprises the following steps implemented by the revocation entity:
loading a value from a current memory location of the main memory; and
overwriting the tag bit associated with the current memory location of the main memory, if the loaded value is a pointer referring to a deallocated object;
wherein the method further comprises the following steps implemented by the revocation entity:
   detecting store operations to the main memory; and
   aborting the revocation operation, if during the revocation operation a store operation to the current memory location of the main memory is detected.

Embodiments of the invention may be implemented in hardware and/or software.

### BRIEF DESCRIPTION OF THE DRAWINGS

Further embodiments of the invention will be described with respect to the following figures, wherein:
Fig. 1 shows a schematic diagram illustrating a conventional data processing apparatus with a revocation entity for temporal memory safety;
Fig. 2a shows a schematic diagram illustrating a data processing apparatus with a revocation entity for temporal memory safety according to an embodiment;
Figs. 2b, 2c and 2d show diagrams illustrating operations implemented by the revocation entity of the data processing apparatus according to an embodiment for one scenario, where a write operation occurs after the revocation procedure, and two scenarios, where a write operation occurs during the revocation procedure resulting in an abortion of the revocation procedure;
Fig. 3 shows a schematic diagram illustrating a data processing apparatus with a plurality of memories and a revocation entity for temporal memory safety according to a further embodiment; and
Fig. 4 shows a schematic diagram illustrating a data processing apparatus with a plurality of memories and a plurality of revocation entities for temporal memory safety according to a further embodiment.

In the figures, identical reference signs will be used for identical or at least functionally equivalent features.

### DETAILED DESCRIPTION OF EMBODIMENTS

In the following detailed description, reference is made to the accompanying drawings, which form part of the disclosure, and in which are shown, by way of illustration, specific aspects in which the present invention may be implemented. It is understood that other aspects may be utilized and structural or logical changes may be made without departing from the scope of the present invention. The following detailed description, therefore, is not to be taken in a limiting sense, as the scope of the present invention is defined by the appended claims.

For instance, it is understood that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

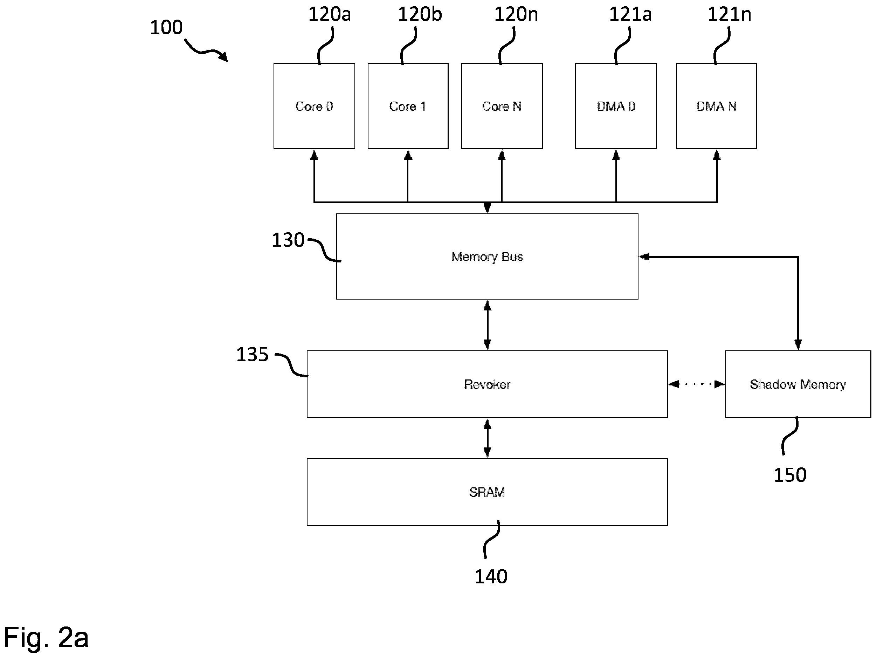

Figure 2a shows a schematic diagram of a data processing apparatus 100. In an embodiment, the data processing apparatus 100 may be a memory constrained computing device, i.e. a computing device with a limited amount of memory 140 such as 64 kilobytes to 512 kilobytes of memory 140 and up to a few Mebibytes (MiBs) of memory 140. The data processing apparatus 100 may be, for instance, an internet of things computing device 100, such as a processor 100 embedded in a streetlamp, kitchen toaster, lightbulb, a motor vehicle 110 or a small processor within a multi core device. The data processing apparatus 100 may be configured to connect to a communications network such as the internet, an extranet or any other communications network.

In the embodiment illustrated in figure 2a the data processing apparatus 100 comprises a plurality of processing units, including a plurality of processing cores 120a-n and a plurality of DMA units 121a-n, configured to process data, a main memory 140 in the form of, for instance, a SRAM 140 configured to store data, and a memory interconnect 130 in the form of a memory bus 130 configured to exchange data between the plurality of processing units 120a-n, 121a-n and the SRAM 140. Although described as one or more SRAMs 140 in the following, the main memory 140 (as well as the further memory units described in further embodiments below) may be implemented as any type of electronic memory or data storage, such as in the form of a Flash memory, a MRAM, a Disc storage, an OTP and the like.

The main memory 140, e.g. SRAM 140 defines a plurality of memory locations, wherein each of the plurality of memory locations is associated with a respective tag bit indicating whether a respective value stored at the respective memory location is a pointer. In an embodiment, the tag bits may be stored in the main memory 140, e.g. SRAM 140 as well.

The data processing apparatus 100 illustrated in figure 2a further comprises a revocation entity 135 (referred to as "revoker" 135 in figure 2a) for invalidating one or more pointers referring to one or more deallocated objects in the SRAM 140 (herein also referred to as "dangling" pointers). According to embodiments disclosed herein, the revocation entity 135 is arranged between the memory bus 130 and the SRAM 140 of the data processing apparatus 100, more specifically between the memory bus 130 and the write ports of the SRAM 140 the memory bus 130 has access to as well as one or more read ports of the SRAM 140. In an embodiment, the one or more pointers comprise one or more fat pointers and/or one or more Capability Hardware Enhanced RISC Instructions, CHERI, capabilities. In an embodiment, the pointers are unforgeable and have address bounds associated with them for allowing to determine an address range a pointer may cover. As will be appreciated, CHERI capabilities may represent pointers, that provide an in-band base and length, and the respective non-addressable tag bit that differentiates valid and invalid pointers.

Thus, according to an embodiment the data processing apparatus 100 provides a hardware type that can represent a source-language notion of a pointer, wherein there is a way of differentiating between valid pointers and other data by means of the respective tag bit and where there is a way of finding the extent of the range that a pointer covers. These requirements are fulfilled, for instance, by CHERI capabilities, and may be possibly implemented with other schemes, such as Intel MPX or similar schemes.

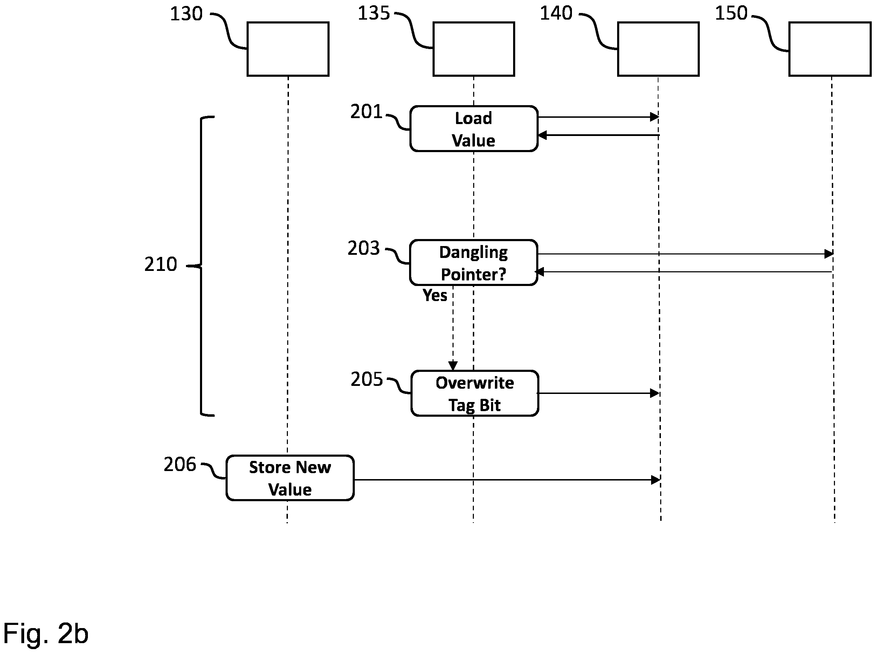

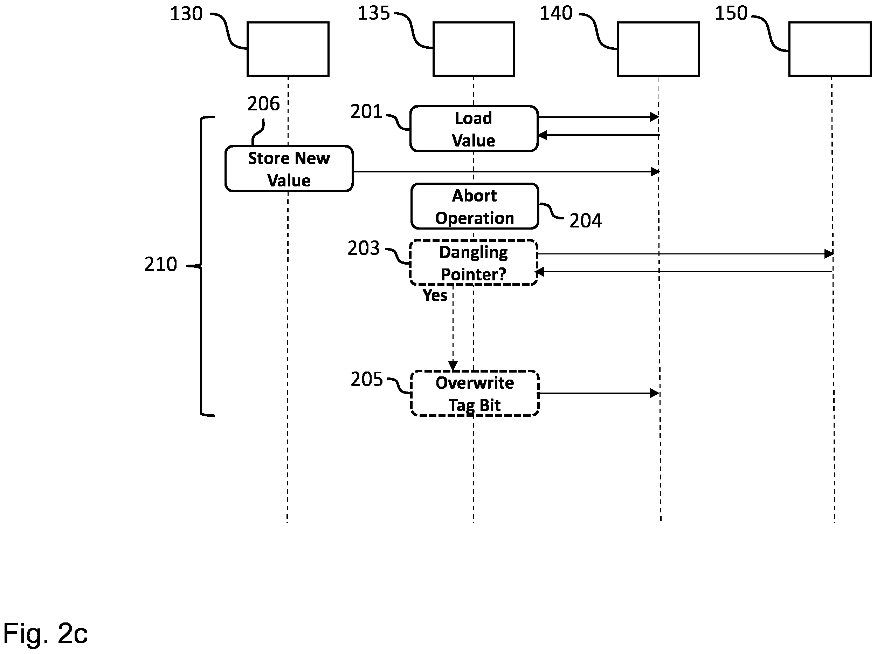

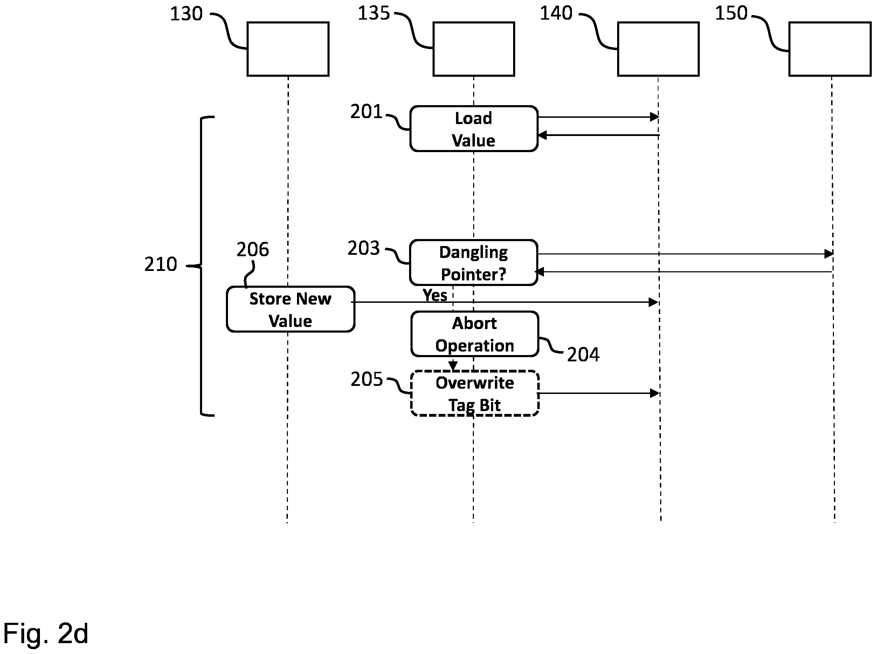

As will be described in more detail in the following under further reference to figures 2b, 2c and 2d, the revocation entity 135 is configured to implement a revocation operation or revocation cycle comprising the steps of loading a value from a current memory location of the SRAM 140 (see step 201 in figures 2b-d), and overwriting the tag bit associated with the current memory location of the SRAM 140 (see step 205 in figure 2b), if the loaded value is a pointer referring to a deallocated object, i.e. a dangling pointer that may compromise the security of the data processing apparatus 100. As will be appreciated, by overwriting the tag bit associated with the current memory location (in case no store operation to the current memory location is detected during the revocation operation) the dangling pointer becomes unusable by changing the is-pointer value of the tag bit to the is-not-pointer value of the tag bit. In an embodiment, the revocation entity 135 may be further configured to overwrite in step 205 of figure 2b the value of the current memory location with a default value, such as all zeros.

In an embodiment, the revocation entity 135 is configured to check whether the loaded value is a pointer referring to a deallocated object by interacting with a shadow memory 150 (see step 203 in figure 2b). When memory of an object is deallocated one or more revocation bits are set in the shadow memory 150 to indicate the locations of deallocated memory. In an example, a granule size is 8 bytes and an object of 24 bytes is deallocated. In this case three bits are set in the shadow memory 150 indicating three 8-byte memory locations have been freed in the SRAM 140.

In an embodiment, the revocation entity 135 is configured to check whether the loaded value is a pointer referring to a deallocated object by calculating an in-bounds address of the pointer, i.e. determining the pointer address the pointer is pointing at and then checking whether the pointer address has been freed or not, as indicated by the revocation bit(s). The bounds of the allowed address range of the pointer may originally be defined by the object the pointer is associated with, wherein the bounds may be narrowed down during operation.

The revocation entity 135 of the data processing apparatus 100 is further configured to detect or monitor store (i.e. write) operations of the plurality of processing units 120a-n, 121a-n to the SRAM 140 and to abort the revocation, i.e. invalidation operation, if during the revocation operation a store, i.e. write operation of at least one of the processing units 120a-n, 121a-n to the current memory location of the SRAM 140 is detected by the revocation entity 135. In an embodiment, the SRAM 140 may comprise an SRAM controller and the revocation entity 135 may be implemented as a component of the SRAM controller so that the revocation entity 135 may observe the address of any store operation. In a further embodiment, the revocation entity 135 may be implemented as a separate bus entity configured to snoop the memory bus 130 for detecting store operations.

Figures 2b, 2c and 2d show diagrams illustrating three different scenarios for the revocation cycle implemented by the revocation entity 135 of the data processing apparatus 100, namely a first scenario illustrated in figure 2b, where a write operation 206 occurs after the revocation procedure 210), a second scenario illustrated in figure 2c, where a write operation 206 occurs after the step 201 of loading the value, and a third scenario illustrated in figure 2d, where a write operation 206 occurs between steps 201 and 203 of figure 2b, and a third scenario illustrated in figure 2d, where a write operation 206 occurs between steps 203 and 205 of figure 2b. In both the second scenario illustrated in figure 2c and the third scenario illustrated in figure 2d, the revocation entity 135 aborts the revocation cycle for the current memory location (see step 204 in figures 2c and 2d) and may continue with the next memory location.

In an embodiment, the revocation entity 135 is configured to scan at least a portion of the main memory 140 comprising a plurality of memory locations by performing the revocation operation sequentially and/or in parallel for the plurality of memory locations of the portion of the main memory 140.

In an embodiment, the revocation entity 135 is configured to load multiple tag bits at the same time from memory without the associated data, for instance, the revocation entity 135 may load a batch of tag bits, such as, for instance, 4, 8, 16, 32 or 64 tag bits. Advantageously the revocation entity 135 may load the respective value in step 201 of figures 2b-d only for those currently scanned memory locations of the SRAM 140 which are identified as pointers by the batch of tags. As will be appreciated, this variant of step 201 of figures 2b-d allows the revocation entity 135 to skip chunks of the SRAM 140 that do not contain pointers and thereby scan the SRAM 140 more efficiently. In other words, in an embodiment, the revocation entity 135 is configured to load a plurality of tag bits associated with the plurality of current memory locations of the SRAM 140 and to load the respective value from the respective current memory location of the SRAM 140 only for those current memory locations which the respective tag bit indicates to be a pointer.

In an embodiment, the revocation entity 135 that has loaded a batch of tag bits is configured to maintain a bit mask of locations that have been stored to during its current revocation operation. When a location in SRAM 140 is stored to the corresponding bit in the mask is cleared. Instead of aborting the operation in step 204, the revocation entity may instead use the bit mask of locations that have been written to update tags only that correspond to locations that have not been concurrently modified.

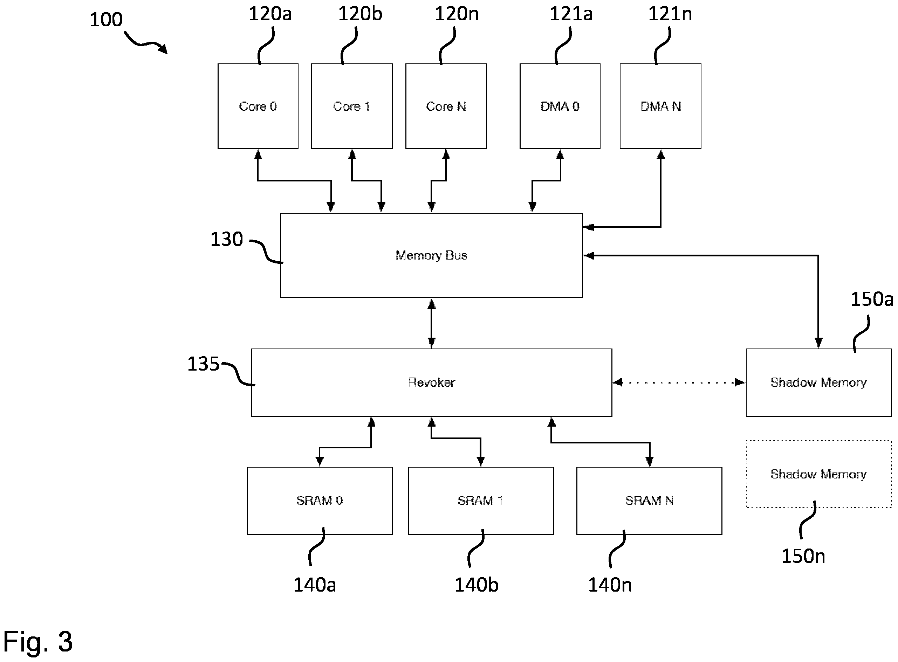

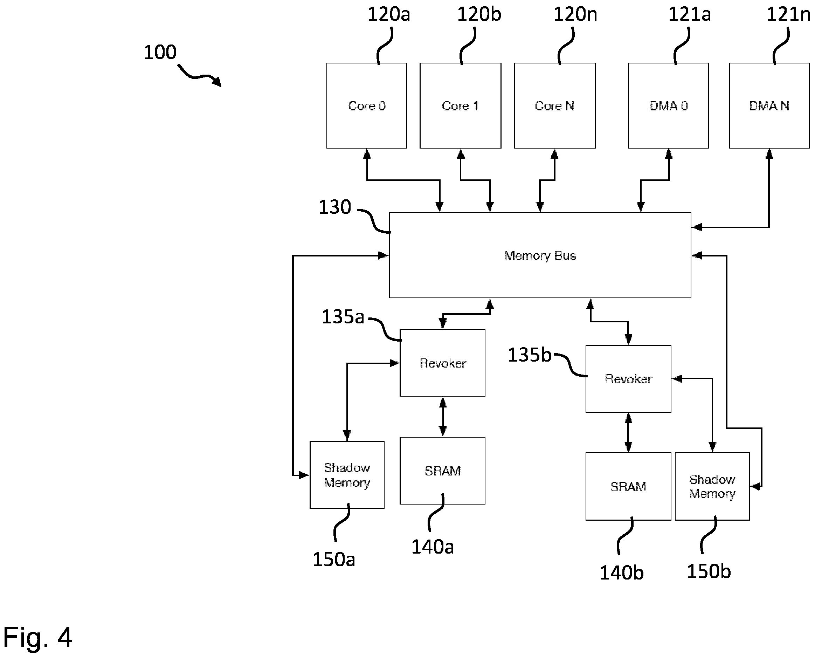

Figures 3 and 4 show schematic diagram illustrating variants of the data processing apparatus 100 according to further embodiments. In the embodiment shown in figure 3 the data processing apparatus 100 comprises a plurality of memories in the form of SRAMs 140a-n, e.g. a memory bank 140a-n, wherein each memory 140a-n is associated with a respective shadow memory 150a-n containing the plurality of revocation bits for identifying deallocated memory locations. In the embodiment shown in figure 4, the data processing apparatus 100 comprises a plurality, by way of example two, revocation entities 135a,b, wherein each revocation entity 135a,b is configured to implement the revocation cycle described above for the embodiment of the single revocation entity 135 for scanning the respective SRAMs 140a,b making use of the respective shadow memories 150a,b. In an embodiment, each revocation entity 135a,b may have access to the shadow memory 150a,b associated with the SRAM 140a,b of the other revocation entity 135a,b. For instance, in an embodiment, the revocation entity 135a may have access to the SRAM 140a and the shadow memories 150a,b, while the revocation entity 135b may have access to the SRAM 140b and the shadow memories 150a,b. The access from the revocation entity 135a to the shadow memory 150b may go either via the memory bus 130 or via a separate channel. In an embodiment with a plurality of memories 140a-n, not every memory 140a-n may require a separate shadow memory 150a-n. For instance, the plurality of memories 140a-n may comprise an SRAM that contains global objects and another SRAM that contains heap objects, wherein both SRAMs have a respective revocation entity, but the former cannot be freed and so does not need a shadow memory.

As will be appreciated, in comparison with the revocation entity disclosed in WO2023/239463A1, the data processing apparatus 100 implements the revocation entity 135 as a separate entity on the memory interconnect 130, e.g. memory bus 130, so that the revocation entity 135 may lock the bus (or individual locations) during each read-modify-write cycle, i.e. the revocation operation. Thus, the revocation operation is made more efficient by arranging the revocation entity 135 between the memory 140 and the memory interconnect, in particular memory bus 130 because every store flows through the revocation entity 135 so that the revocation entity 135 may easily detect conflicts and skip the writeback, wherever they come from in the system. As will be appreciated, the approach implemented by the data processing apparatus 100 according to embodiments disclosed herein scales to multiple memory banks with one revocation entity 135 per memory. This may incur some possible contention on revocation bitmaps maintained in a shadow memory 150, but the order of revocation is not defined and so it is possible to alleviate this with additional pipelining in the revocation entities 135, so that more than one in-flight revocation operation may be used.

## Claims

1. A data processing apparatus (100), comprising:
a main processor (120a-n) configured to process data;
a main memory (140; 140a-n) configured to store data at a plurality of memory locations, wherein each of the plurality of memory locations is associated with a respective tag bit indicating whether a respective value stored at the respective memory location is a pointer; and
a memory interconnect (130) configured to exchange data between the main processor (120a-n) and the main memory (140; 140a-n),
wherein the data processing apparatus (100) further comprises a revocation entity (135; 135a,b) for invalidating one or more pointers referring to one or more deallocated objects in the main memory (140; 140a-n),
wherein the revocation entity (135; 135a,b) is arranged between the memory interconnect (130) and the main memory (140; 140a-n), and configured to implement a revocation operation, comprising:
loading a value from a current memory location of the main memory (140; 140a-n); and
overwriting the tag bit associated with the current memory location of the main memory (140; 140a-n), if the loaded value is a pointer referring to a deallocated object;
wherein the revocation entity (135; 135a,b) is further configured to detect store operations to the main memory (140; 140a-n) and to abort the revocation operation, if during the revocation operation the revocation entity (135; 135a,b) detects a store operation to the current memory location of the main memory (140; 140a-n).

2. The data processing apparatus (100) of claim 1, wherein prior or in parallel to loading the value from the current memory location of the main memory (140; 140a-n) the revocation operation further comprises loading one or more of the plurality of tag bits, including the tag bit associated with the current memory location of the main memory (140; 140a-n).

3. The data processing apparatus (100) of claim 1 or 2, wherein the revocation entity (135; 135a,b) is configured to perform the revocation operation for a plurality of current memory locations of the main memory (140; 140a-n) substantially in parallel.

4. The data processing apparatus (100) of claim 2 or 3, wherein the revocation entity (135; 135a,b) is configured to load a plurality of tag bits associated with the plurality of current memory locations of the main memory (140; 140a-n) and to load the respective value from the respective current memory location of the main memory (140; 140a-n) only for those current memory locations which the respective tag bit indicates to be a pointer.

5. The data processing apparatus (100) of claim 4, wherein the revocation entity (135; 135a,b) is configured to maintain a bit mask of memory locations that have been stored to during the revocation operation.

6. The data processing apparatus (100) of any one of the preceding claims, wherein the one or more pointers comprise one or more fat pointers and/or one or more Capability Hardware Enhanced RISC Instructions, CHERI, capabilities.

7. The data processing apparatus (100) of any one of the preceding claims, wherein the memory interconnect (130) is a memory bus (130).

8. The data processing apparatus (100) of claim 7, wherein the data processing apparatus (100) comprises a plurality of processing units (120a-n), including the main processor (120a-n), configured to process data and wherein the revocation entity (135; 135a,b) is arranged between the memory interconnect and the plurality of processing units (120a-n).

9. The data processing apparatus (100) of any one of the preceding claims, wherein the data processing apparatus (100) further comprises one or more shadow memories (150; 150a-n) and wherein each shadow memory (150; 150a-n) is configured to store a plurality of revocation bits, wherein each revocation bit is associated with a respective memory location of the plurality of memory locations of the main memory (140; 140a-n) and indicative of whether the respective memory location is deallocated.

10. The data processing apparatus (100) of claim 9, wherein the revocation entity (135; 135a,b) is configured to check whether the loaded value is a pointer referring to a deallocated object based on the tag bit associated with the loaded value and the revocation bit associated with the memory location the loaded value is referring to.

11. The data processing apparatus (100) of any one of the preceding claims, wherein the data processing apparatus (100) comprises a plurality of memory units (140a-n), including the main memory (140), configured to store data at a plurality of memory locations, wherein each of the plurality of memory locations is associated with a respective tag bit indicating whether a respective value stored at the respective memory location is a pointer and wherein the revocation entity (135; 135a,b) is arranged between the memory interconnect and the plurality of memory units (140a-n).

12. The data processing apparatus (100) of claim 11, wherein each of the plurality of memory units (140a-n) is associated with a shadow memory (150; 150a-n).

13. The data processing apparatus (100) of claim 11 or 12, wherein the data processing apparatus comprises a plurality of revocation entities (135; 135a,b) for invalidating one or more pointers referring to one or more deallocated objects in the plurality of memory units (140; 140a-n), wherein each revocation entity (135; 135a,b) is arranged between the memory interconnect (130) and a respective memory unit of the plurality of memory units (140; 140a-n) and configured to implement a revocation operation, comprising:
loading a value from a current memory location of the respective memory unit of the plurality of memory units (140; 140a-n); and
overwriting the tag bit associated with the current memory location of the respective memory units of the plurality of memory units (140; 140a-n), if the loaded value is a pointer referring to a deallocated object;
wherein each revocation entity (135; 135a,b) is further configured to detect store operations to the respective memory unit of the plurality of memory units (140; 140a-n) and to abort the revocation operation, if during the revocation operation a store operation to the current memory location of the respective memory unit of the plurality of memory units (140; 140a-n) is detected.

14. The data processing apparatus (100) of claim 13, wherein each of the plurality of revocation entities (135; 135a,b) is associated with a shadow memory (150a,b) for checking whether a respective loaded value is a pointer referring to a deallocated object.

15. The data processing apparatus (100) of any one of the preceding claims, wherein the revocation entity (135; 135a,b) is configured to scan at least a portion of the main memory (140; 140a-n) comprising a plurality of memory locations by performing the revocation operation sequentially and/or in parallel for the plurality of memory locations of the portion of the main memory (140; 140a-n).

16. A method for operating a data processing apparatus (100), the data processing apparatus (100) comprising a main processor (120a-n) configured to process data, a main memory (140; 140a-n) configured to store data at a plurality of memory locations, wherein each of the plurality of memory locations is associated with a respective tag bit indicating whether a respective value stored at the respective memory location is a pointer, a memory interconnect (130) configured to exchange data between the main processor (120a-n) and the main memory (140; 140a-n), and a revocation entity (135; 135a,b) for invalidating one or more pointers referring to one or more deallocated objects in the main memory (140; 140a-n), wherein the revocation entity (135; 135a,b) is arranged between the memory interconnect (130) and the main memory (140; 140a-n), wherein the method comprises the following steps implemented by the revocation entity (135; 135a,b):
loading a value from a current memory location of the main memory (140; 140a-n); and
overwriting the tag bit associated with the current memory location of the main memory (140; 140a-n), if the loaded value is a pointer referring to a deallocated object;
wherein the method further comprises the following steps implemented by the revocation entity (135; 135a,b):
detecting store operations to the main memory (140; 140a-n); and
aborting the revocation operation, if during the revocation operation a store operation to the current memory location of the main memory (140; 140a-n) is detected.
